# EUROPEAN PATENT APPLICATION

(11) **EP 4 830 830 A1**
(43) Date of publication of application: **28.10.2026**
(21) Application number: 24906970.9
(22) Date of filing: 08.11.2024
(51) Int. Cl.: B01J 20/06

(54) **CARBON DIOXIDE SOLID CAPTURE MATERIAL**

(30) Priority: 20.12.2023 JP 2023215077
(71) Applicant: Toda Kogyo Corp., Hiroshima-shi, Hiroshima 732-0828 (JP)
(72) Inventor: KOBAYASHI, Nobuyuki, Otake-shi, Hiroshima 739-0652 (JP); WAKITA, Tsuyoshi, Otake-shi, Hiroshima 739-0652 (JP); TAKAHASHI, Shinji, Otake-shi, Hiroshima 739-0652 (JP); OKAZAKI, Seiji, Otake-shi, Hiroshima 739-0652 (JP); SAEDA, Takuya, Otake-shi, Hiroshima 739-0652 (JP)
(74) Representative: Cabinet Becker et Associés
(86) International application number: PCT/JP2024/039796
(87) International publication number: WO 2025/134582

(57) **Abstract**

To provide a carbon dioxide solid capture material having durability that enables long-term use, in particular, repeated use for gases including water, a carbon dioxide solid capture material of the present invention includes iron, sodium, and crystalline carbon, more specifically, includes a binder which is at least one substance selected from sodium ferrite, crystalline carbon, amorphous carbon, polyamide-imide, polyester, an epoxy resin, polyurethane, and an acrylic resin.

## Description

### Technical Field

The present invention relates to solid capture materials for fixing carbon dioxide and methods for manufacturing the solid capture materials and specifically to a solid capture material including sodium ferrite.

### Related Art

Studies on capturing and storing carbon dioxide as well as its recovery and utilization have been underway to reduce the amount of the carbon dioxide released into the atmosphere. Examples of a large-scale source of carbon dioxide include thermal power stations, boilers of factories, and kilns of cement factories using, for example, coal, heavy oil, or natural gas as a fuel. Other examples are blast furnaces of ironworks where iron oxide is reduced by cokes and transportation vehicles, such as automobiles, marine vessels, and aircraft, using, for example, gasoline, heavy oil, or light oil as a fuel.

Patent Literature 1 discloses a sodium ferrite-containing carbon dioxide solid capture material, wherein addition of an organic binder or an inorganic binder provides a solid capture material including highly concentrated sodium ferrite. Patent Literature 1 further discloses polystyrene, polyethylene, and the like as examples of the organic binder, and discloses Na, Li, K, and the like as examples of the inorganic binder.

### Citation List

### Patent Literature

Patent Literature 1: WO 2022/259929 A1

### Summary of Invention

### Technical Problem

For practical use of the carbon dioxide solid capture material, durability is required as well as the performance represented by, for example, the amount of carbon dioxide captured.

It is an object of the present invention to provide a carbon dioxide solid capture material which can be used for a long period of time.

### Solution to Problem

The present invention provides a carbon dioxide solid capture material including iron, sodium, and crystalline carbon. Moreover, the crystalline carbon may be at least one substance selected from graphite, carbon nanotube, acetylene black, and calcine coke. The solid capture material may further include a binder. the binder may be at least one substance selected from amorphous carbon, polyamide-imide, polyester, an epoxy resin, polyurethane, and an acrylic resin. The binder may include a calcined product of pitch. A percentage of a total carbon content of the crystalline carbon and the binder may be 10 to 70 wt%. The solid capture material may contain sodium ferrite. A composition ratio of Fe included in the solid capture material may be 5 to 50 wt%.

### Advantageous Effects of Invention

A carbon dioxide solid capture material according to the present invention is water-resistant and has strength and thus has durability that enables long-term use.

### Description of Embodiments

Embodiments of the present invention will be described below. The description of the following embodiment is substantially a mere example and does not intend to limit the present invention, or the application method or application thereof.

A carbon dioxide solid capture material according to an embodiment of the present invention (which hereinafter may be simply referred to as "solid capture material") will be described.

The carbon dioxide solid capture material according to the present embodiment includes iron (Fe), sodium (Na), and crystalline carbon.

The form of the Fe included in the solid capture material is not limited to a particular form. In other words, the Fe may be an element or a compound, and the phase (α, β, γ, etc.) thereof is also not limited to a particular phase. When the solid capture material includes the Fe as a compound, components, other than the Fe, in the compound are not limited to particular components. Further, the solid capture material may contain the Fe in one, or two or more forms. Examples of the form of the Fe include at least one of α-Fe, FeO, or Fe₃O₄.

A composition ratio of the Fe included in the solid capture material is preferably 5 to 50 wt%, more preferably 8 to 40 wt%, much more preferably 11 to 30 wt%. When this composition ratio is within the range described above, the solid capture material is excellent in strength.

The form of the Na included in the solid capture material is not limited to a particular form but may include one, or two or more forms. Examples of the form of the Na include at least one of Na₂CO₃(H₂O) or Na₂CO₃.

The composition ratio of the Na included in the solid capture material is preferably 1 to 20 wt%, more preferably 1.5 to 15 wt%, much more preferably 2 to 10 wt%. When this composition ratio is within the range described above, the carbon dioxide capture ratio is satisfactory.

The Fe and the Na included in the solid capture material may constitute sodium ferrite (NaFeO₂). In other words, the solid capture material may contain sodium ferrite. The form of the sodium ferrite is not limited to a particular form but may include one, or two or more types. Examples of the form of the sodium ferrite include at least one of α-NaFeO₂ or β-NaFeO₂.

Further, the reaction of the sodium ferrite with carbon dioxide is represented by the following formula: NaFeO₂ + 1/2CO₂ → 1/2Na₂CO₃ + 1/2Fe₂O₃, when a gas includes no water vapor, or NaFeO₂ + CO₂ + 1/2H₂O → NaHCO₃ + 1/2Fe₂O₃, when the gas includes the water vapor. Furthermore, the solid capture material after the reaction with the carbon dioxide is placed in an atmosphere including no carbon dioxide under predetermined temperature conditions, thereby causing carbon dioxide to be desorbed. As described above, the solid capture material can repeat the adsorption and fixation, and further the desorption, of carbon dioxide.

When the solid capture material contains the sodium ferrite, the molar ratio of Na/Fe of the sodium ferrite is preferably from 0.7 to 1.3. When the molar ratio is within the above-described range, a large number of sodium ferrite crystal phases can be included, so that the performance of fixing and capturing carbon dioxide is satisfactory.

When the solid capture material contains the sodium ferrite, the pH value of the sodium ferrite in powder form is preferably from 8 to 14. When the powder pH value is from 8 to 14, the carbon dioxide solid capture material according to the present embodiment is basic and thus easily captures the carbon dioxide which is weakly acidic.

When the solid capture material contains the sodium ferrite, the axis ratio of a mean major axis diameter to a mean minor axis diameter of primary particles of the sodium ferrite (mean major axis diameter/mean minor axis diameter) is preferably from 1 to 2. When the axial ratio is within the range described above, the primary particles of the sodium ferrite are less likely to agglomerate and can thus have high dispersibility. The axial ratio of the primary particles of the sodium ferrite is more preferably from 1.1 to 1.9.

The crystalline carbon included in the solid capture material is preferably at least one substance selected from graphite, carbon nanotube, acetylene black, and calcine coke, and two or more of which may be used in combination. The crystalline carbon imparts the strength to the solid capture material and functions as a structural support that maintains the shape of the solid capture material. Moreover, the solid capture material including the crystalline carbon is water resistant and is therefore preferably used in treatment of a gas containing water. Moreover, the crystalline carbon can impart, to the solid capture material, a structure, specifically, a fine pore, which allows carbon dioxide to come into contact with the Fe and the Na (including the case of a compound such as the sodium ferrite) included in the solid capture material.

The solid capture material preferably contains a binder. The binder binds components such as Fe, Na, and crystalline carbon, constituting the solid capture material, thereby maintaining the shape of the solid capture material. The solid capture material preferably includes, as the binder, at least one of amorphous carbon or polymer, or may include one, or two or more types of binders. Examples of the polymer include polyamide-imide, polyester, an epoxy resin, polyurethane, and an acrylic resin. Examples of the amorphous carbon include a calcined product of pitch. The pitch is a by-product of petroleum or coal tar.

Containing the crystalline carbon and the above-described binder enables the solid capture material to maintain its structure also when the solid capture material is repeatedly used for a long period of time. In general, the solid capture material is filled in a container when used. The container and a structural object including a plurality of pieces of the solid capture material filled in the container are referred to as an adsorption tower. In the adsorption tower, a gas to be treated passes through a gap between the pieces of the solid capture material. When the solid capture material collapses, the flow path of the gas narrows or crushes, and therefore, pressure loss increases.

When the binder is a polymer, the weight-average molecular weight is preferably 1,000 to 100,000. When the weight-average molecular weight is less than 1,000, the molded body is too soft, and the strength of the molded body may decrease. When the weight-average molecular weight is greater than 100,000, the organic binder is too hard, and the formation of the molded body may be difficult.

In the solid capture material, the percentage of the total carbon content of the crystalline carbon and the binder is preferably 10 to 70 wt%, more preferably 15 to 65 wt%, much more preferably 20 to 60 wt%. When this composition ratio is within the range described above, high strength and high water resistance are obtained.

The solid capture material preferably includes iron (Fe), sodium (Na), and crystalline carbon with the remainder being oxygen.

The solid capture material preferably has a particle size of 1 mm to 10 mm. The particle size is an average value of the major axis and the minor axis of the solid capture material. When the particle size is greater than or equal to 1 mm, a gap through which the gas to be treated can pass can be ensured between the particles of the solid capture materials in the adsorption tower, and therefore, the pressure loss can be suppressed to a practically acceptable level. When the particle size is less than or equal to 10 mm, the contact ratio between the Fe and the carbon dioxide increases, and the carbon dioxide can be efficiently captured. The solid capture material preferably has a particle size of 2 mm to 8 mm.

The shape of the solid capture material is not limited to a particular shape but is preferably circularly columnar shape, spindle shape, rectangular parallelepiped, dice, spherical, or the like.

The axial ratio of the solid capture material, that is, a value obtained by dividing the major axis of the solid capture material by the length of the minor axis is preferably 1 to 5. When the axial ratio is greater than or equal to 1, gaps which serve as flow paths of a gas are easily formed between particles of the solid capture material. In contrast, when the axial ratio is less than or equal to 5, the size of the gaps is to such an extent that the carbon dioxide can efficiently come into contact with Fe and Na, and the gaps can be uniformly distributed in the entirety of the adsorption tower. The axial ratio is more preferably 1.5 to 4.

The strength of the solid capture material is preferably greater than or equal to 20 N, more preferably greater than or equal to 60 N, and much more preferably greater than or equal to 100 N. Particles of the solid capture material located at a particularly lower part in the adsorption tower receive pressure of particles of the solid capture material located at an upper part in the adsorption tower. Moreover, when a gas which is to be treated is allowed to pass in the adsorption tower, the gas also applies pressure to the solid capture material. When the strength is within the range described above, the solid capture material is less likely to be pulverized, and the gas, which is, for example, an exhaust gas to be treated, easily passes in the adsorption tower.

The porosity of the solid capture material is preferably 20 to 80 vol%, more preferably 25 to 70 vol%, and much more preferably 30 to 65 vol%. When the porosity is within the range described above, the carbon dioxide and the solid capture material included in the gas, which is to be treated, easily come into contact with each other, and therefore, the carbon dioxide can be easily captured.

The bulk density of the solid capture material is preferably greater than or equal to 0.4 g/cc, more preferably greater than or equal to 0.45 g/cc. When the bulk density is within the range described above, the filling property to the adsorption tower is enhanced. An upper limit value of the bulk density is about 1 g/cc.

Then, an example of the method for producing the carbon dioxide solid capture material described above will be described. The solid capture material is not limited to the following method.

The method for producing the solid capture material includes: a kneading step of kneading a carbon dioxide adsorbent including Fe and Na and a structural support including crystalline carbon; and a molding step of molding a kneaded product.

The kneaded product preferably includes 20 to 140 parts by weight of the structural support with respect to 100 parts by weight of the carbon dioxide adsorbent.

In the kneading step, a Fe raw material and a Na raw material may be sodium ferrite as described above. A material such as a binder may be further added to the materials described above. The kneaded product includes preferably 0 to 50 parts by weight, more preferably 10 to 40 parts by weight, of the binder, with respect to 100 parts by weight of the carbon dioxide adsorbent. Further, liquid such as water and an organic solvent may be added. For kneading, a kneading apparatus, such as a double-arm kneader, a screw kneader, a muller mill, a Plough mixer, or a planetary mixer may be used.

In the molding step, a technique, such as a die cutting, extruding (screw, roller, etc.), rolling, cutting, and spherical granulating, may be used alone or in combination. For example, the kneaded product may be molded by extrusion by using an extruder and may be cut to a predetermined length.

The method for producing the solid capture material may further include a drying step of drying a molded product after molding.

Moreover, the method for producing the solid capture material may further include a calcining step of calcining the molded product. When the drying step is included, the calcining step may be performed after the drying step. Calcination is preferably performed in a nitrogen atmosphere. Note that aqueous vapor heating, microwave heating, ultrasonic heating, or the like may be performed instead of general calcination. The temperature and period of the calcination are accordingly set such that a solid capture material having desired strength can be obtained. The calcination is preferably performed at a temperature higher than or equal to 100°C and lower than or equal to 1000°C depending on the types of the structural support and the binder. For example, when pitch is used as the binder, calcination is preferably performed at a temperature higher than a temperature at which the oil component of the pitch evaporates, and for example, the temperature is preferably 500°C or higher.

Note that the method for producing the solid capture material may further include a step of producing sodium ferrite. The step of producing the sodium ferrite at least includes causing solid-phase reaction of a material including iron oxide and a material including sodium. Specifically, the material including the iron oxide and the material including the sodium are mixed, deagglomeration, and then calcined, and are thereafter accordingly deagglomeration, thereby providing powder of sodium ferrite particles. Examples of a material including the iron oxide may include at least one of hematite, magnetite, maghemite, or geothite. Examples of a material including the sodium may include at least one of sodium nitrite, sodium hydroxide, sodium oxide, or sodium carbonate.

As described above, the solid capture material is applicable to the adsorption tower. The adsorption tower includes a container and a plurality of particles of the solid capture material filled in the container. In the adsorption tower, the solid capture material preferably has an average particle size of 1 mm to 10 mm. The average particle size can be calculated by measuring major axes and minor axes of 80 particles and averaging values thus measured.

The dimension of the container and/or the amount of the solid capture material filled in the container may be accordingly adjusted depending on the condition of use, purpose, and the like of the adsorption tower.

The solid capture material can selectively adsorb and fix carbon dioxide from a gas including the carbon dioxide. During adsorption, a gas to be treated is brought into contact with the solid capture material. The temperature at this time is preferably about 20 to 80°C.

The solid capture material to which the carbon dioxide has been fixed is placed under a temperature condition of about 50°C to 200°C, thereby desorbing the carbon dioxide.

The solid capture material after the desorption can be further used for adsorption and fixation of the carbon dioxide, and therefore, the solid capture material can be used repeatedly.

### EXAMPLES

### <Method for Producing Solid Capture Material>

Examples 1 to 7, Comparative Example 1: The structural support, binder, and sodium ferrite (NaFeO₂) shown in Table 1 were weighed in the weight ratios shown in Table 1 and were mixed together to obtain a mixture. The mixture was loaded into a kneader, and 100 parts by weight of water was loaded and kneaded for 1 hour. After the kneading, the mixture was formed to have a diameter of 2 mm by using an extruder and was cut to a length of 5 mm. After the cutting, the mixture was dried at a drying temperature of 60°C for 12 hours and was calcined at a temperature of 600°C for 3 hours in a nitrogen atmosphere furnace to obtain a solid capture material.

Example 8: Materials were prepared in the weight ratios as shown in Table 1, and a solid capture material was obtained in a similar manner to Example 1 except that water was not added during the kneading and the calcination was performed at a temperature of 200°C.

Comparative Example 2: Materials were prepared in the weight ratios as shown in Table 1, and a solid capture material was obtained in a similar manner to Example 1 except that the calcination was not performed.

Comparative Example 3: A solid capture material was obtained in a similar manner to Example 1 except that the structural support was not used and materials were prepared in the weight ratios as shown in Table 1.

**[Table 1]**

| | Structural Support | Binder | Structural Support (parts by weight) | Binder (parts by weight) | NaFeO₂ (parts by weight) | Moisture (parts by weight) | Calcination Temperature (°C) | Calcination (Time) |
|---|---|---|---|---|---|---|---|---|
| Example 1 | CNT | Pitch | 33 | 19 | 100 | 100 | 600 | 3 |
| Example 2 | CNT | Pitch | 85 | 26 | 100 | 100 | 600 | 3 |
| Example 3 | CNT | Pitch | 125 | 32 | 100 | 100 | 600 | 3 |
| Example 4 | Artificial Graphite | Pitch | 85 | 26 | 100 | 100 | 600 | 3 |
| Example 5 | Natural Graphite | Pitch | 85 | 26 | 100 | 100 | 600 | 3 |
| Example 6 | Acetylene Black | Pitch | 85 | 26 | 100 | 100 | 600 | 3 |
| Example 7 | Calcine Coke | Pitch | 85 | 26 | 100 | 100 | 600 | 3 |
| Example 8 | CNT | Polyamide Imide | 86 | 26 | 100 | - | 200 | 3 |
| Comparative Example 1 | Cordierite | Pitch | 85 | 26 | 100 | 100 | 600 | 3 |
| Comparative Example 2 | Cellulose | - | 100 | 0 | 100 | 100 | - | - |
| Comparative Example 3 | - | Pitch | 0 | 14 | 100 | 100 | 600 | 3 |

| | | | | | | | | |
|---|---|---|---|---|---|---|---|---|
| *CNT: Carbon Nanotube | | | | | | | | |

### <Analysis>

### (Crystallinity)

Compounds included in the structural support and the binder of the solid capture material of Examples and Comparative Examples are shown in Table 2. When the compounds included in the structural support and the binder were carbon (C), the condition (crystallinity/amorphous) is shown in Table 2.

The solid capture material was pulverized by using a mortar, and the crystallite size of the (002) plane was calculated based on the Scherrer equation by using a fully automatic multipurpose X-ray diffractometer, D8ADVANCE manufactured by BRUKER. Moreover, the average interplanar spacing d(002) was calculated by using the Bragg equation. When the average interplanar spacing d(002) was 3.35 to 3.6 Å or the crystallite size was 20 to 400 Å, the solid capture material was determined to be the crystalline carbon.

Moreover, for the binder, calcination was performed under the same conditions as the calcination of the solid capture material to separately prepare a sample, which showed no crystalline peaks when measured by using an apparatus similar to that described above, and therefore, the binder was identified as amorphous carbon. Moreover, Na and Fe components included in the capture material were removed by hydrochloric acid, and then, observation was performed by using a scanning electron microscope. Since carbon components other than the crystalline carbon were observed, the capture material was determined to include the amorphous carbon.

**[Table 2]**

| | Structural Support | Binder |
|---|---|---|
| Example 1 | Crystalline Carbon | Amorphous Carbon |
| Example 2 | Crystalline Carbon | Amorphous Carbon |
| Example 3 | Crystalline Carbon | Amorphous Carbon |
| Example 4 | Crystalline Carbon | Amorphous Carbon |
| Example 5 | Crystalline Carbon | Amorphous Carbon |
| Example 6 | Crystalline Carbon | Amorphous Carbon |
| Example 7 | Crystalline Carbon | Amorphous Carbon |
| Example 8 | Crystalline Carbon | Polymer Resin |
| Comparative Example 1 | Ceramic | Amorphous Carbon |
| Comparative Example 2 | Polymer Resin | - |
| Comparative Example 3 | Amorphous Carbon | Amorphous Carbon |

### (Average Particle Size)

Major axes and minor axes of 80 particles were measured by using a vernier caliper. Each particle of the solid capture material maintained its dimension as molded. The average value of the measuring results was defined as the average particle size.

### (Porosity)

Based on JISR1655, the porosity of the solid capture material was measured by a mercury intrusion porosimetry.

### (Bulk Density)

Based on JISZ2504, the bulk density of the solid capture material was measured.

**[Table 3]**

| | Average Particle Size (mm) | Porosity (vol%) | Bulk Density (g/cc) |
|---|---|---|---|
| Example 1 | 3.5 | 40 | 0.70 |
| Example 2 | 3.5 | 57 | 0.53 |
| Example 3 | 3.5 | 62 | 0.42 |
| Example 4 | 3.5 | 35 | 0.75 |
| Example 5 | 3.5 | 33 | 0.86 |
| Example 6 | 3.5 | 55 | 0.47 |
| Example 7 | 3.5 | 35 | 0.70 |
| Example 8 | 2.5 | 33 | 0.47 |
| Comparative Example 1 | 3.5 | 32 | 1.12 |
| Comparative Example 2 | 3.5 | 46 | 0.50 |
| Comparative Example 3 | 3.5 | 26 | 0.97 |

### <Compound Composition of Solid Capture Material>

The solid capture material was pulverized by using a mortar, and a carbon dioxide absorbing component and a structural support were identified by using a fully automatic multipurpose X-ray diffractometer, D8ADVANCE manufactured by BRUKER.

### <Element Composition Ratio of Solid Capture Material>

For pre-treatment of elemental analysis and quantification except for carbon and oxygen, the solid capture material was pulverized by using a mortar, and the solid capture material thus pulverized and high-purity cellulose powder, SpectoroBlend, 44 µm powder (CHemplex Industries, inc.), which is a molding agent were mixed together in 1 part by weight each by using a planetary centrifugal mixer to obtain a mixture. Then, the mixture was powder-compacted to have 10 mm in diameter and 1 mm in thickness, and the elemental analysis and quantification except for carbon and oxygen were performed by using a scanning X-ray fluorescence spectrometer, ZSX Primus II manufactured by Rigaku Holdings Corporation.

Moreover, the quantity of carbon was determined by using a carbon-sulfur analyzer (EMIA-920V2; HORIBA, Ltd.), and the quantity of oxygen was determined by using oxygen·nitrogen·hydrogen analyzer (EMGA-930; HORIBA, Ltd.).

**[Table 4]**

| | Structural Support | Composition Ratio (wt%) | | | |
|---|---|---|---|---|---|
| | | Na | Fe | C | O |
| Example 1 | CNT | 7 | 24 | 25 | 44 |
| Example 2 | CNT | 5 | 17 | 46 | 32 |
| Example 3 | CNT | 4 | 13 | 54 | 29 |
| Example 4 | Artificial Graphite | 5 | 17 | 46 | 32 |
| Example 5 | Natural Graphite | 5 | 17 | 46 | 32 |
| Example 6 | Acetylene Black | 5 | 17 | 46 | 32 |
| Example 7 | Calcine Coke | 5 | 17 | 46 | 32 |
| Example 8 | CNT | 5 | 17 | 48 | 30 |
| Comparative Example 1 | Cordierite | 5 | 17 | 46 | 32 |
| Comparative Example 2 | Cellulose | 8 | 17 | 27 | 48 |
| Comparative Example 3 | - | 16 | 44 | 7 | 33 |

### <Evaluation of Performance>

### (Water Resistance)

Into a 200 ml beaker was poured 100 ml pure water, and 10 g of the solid capture material was immersed in the pure water. The solid capture material thus immersed in the pure water was left still at 30°C, and a change in shape of the solid capture material over time was visually observed. The water resistance was determined to be a "pass" if the amount of time until a change in shape of the solid capture material was observed was less than 5 hours after the immersion, and a "fail" if the amount of time was greater than or equal to 5 hours. No change in shape of the solid capture materials of Examples 1 to 8 was observed after the immersion in pure water after 1 month or longer.

### (Carbon Dioxide Capture Ratio)

In order to evaluate the performance of fixing and capturing carbon dioxide of the solid capture material, the carbon dioxide capture ratio was measured as described below. The solid capture material was filled in a packed tower column (25 mm in diameter × 500 mm in height) as the adsorption tower to a height of 300 mm. In the packed tower column, a temperature was adjusted to 40°C and the relative humidity was adjusted to 80 RH%, and a mixed gas of carbon dioxide of 10 vol% and nitrogen of 90 vol% was introduced through the packed tower column by using GHSV490h-1 for 7 hours. Then, the temperature in the packed tower column was increased to 150°C, and carbon dioxide was allowed to desorb from the solid capture material over 2 hours. The instantaneous concentration of carbon dioxide thus desorbed was measured by using an infrared gas monitor RI-557 (manufactured by RIKEN KEIKI Co., Ltd.), and based on measuring results, the amount of captured carbon dioxide was calculated. Further, the carbon dioxide capture ratio (wt%) was calculated as the amount captured per unit weight of the solid capture material filled.

### (Average Crushing Strength)

The strength of the solid capture material was measured by using a digital force gauge, ZP-500N manufactured by IMADA CO., LTD. A compressive load was applied to a major axis side surface of the solid capture material having a circularly columnar shape, and a load at which the solid capture material crushed was defined as a crushing strength and expressed in the unit of Newton (N). The average value of crushing strengths of 80 particles was defined as an average crushing strength. The strength was classified as excellent for an average crushing strength greater than or equal to 100 N, good for an average crushing strength greater than or equal to 20 and less than 100 N, and poor for an average crushing strength less than 20 N.

**[Table 5]**

| | Water Resistance | CO₂ Capture Ratio (wt%) | Average Crushing Strength (N) |
|---|---|---|---|
| Example 1 | Pass | 6 | Excellent |
| Example 2 | Pass | 7 | Excellent |
| Example 3 | Pass | 7 | Excellent |
| Example 4 | Pass | 5 | Excellent |
| Example 5 | Pass | 4 | Excellent |
| Example 6 | Pass | 7 | Good |
| Example 7 | Pass | 5 | Good |
| Example 8 | Pass | 5 | Excellent |
| Comparative Example 1 | Fail | 7 | Good |
| Comparative Example 2 | Fail | 7 | Poor |
| Comparative Example 3 | Fail | 6 | Good |

The solid capture materials obtained in Examples 1 to 7 contained Na, Fe, and crystalline carbon. Specifically, Na₂CO₃(H₂O), Na₂CO₃, α-NaFeO₂, β-NaFeO₂, α-Fe, FeO, Fe₃O₄, and structural supports shown in Table 4 were contained. The solid capture materials obtained in Examples 1 to 7 further contained non-crystalline carbon. Further, also after adsorption and desorption of the carbon dioxide, the phase of the compound contained in the solid capture materials was unchanged from that described above.

The solid capture material obtained in Example 8 contained Na, Fe, and crystalline carbon. Specifically, Na₂CO₃(H₂O), Na₂CO₃, α-NaFeO₂, and CNT were contained. The solid capture material obtained in Example 8 further contained a polymer resin. Further, also after adsorption and desorption of the carbon dioxide, the phase of the compound contained in the solid capture material was unchanged from that described above.

In contrast, the solid capture materials obtained in Examples 1 to 3 contained Na and Fe. Specifically, in Comparative Example 1, Na₂CO₃(H₂O), α-NaFeO₂, Fe₃O₄, and cordierite were contained. In Comparative Example 2, Na₂CO₃(H₂O), Na₂CO₃, α-NaFeO₂, and cellulose were contained. In Comparative Example 3, Na₂CO₃(H₂O), Na₂CO₃, α-NaFeO₂, β-NaFeO₂, α-Fe, FeO, and Fe₃O₄ were contained.

The solid capture materials of Comparative Example 1 to 3, however, contained no crystalline carbon and were thus determined to be a fail in terms of the water resistance. Further, the solid capture material of Comparative Example 2 contained no binder and was thus determined to be a fail also in terms of the average crushing strength.

As described above, the solid capture material according to the present invention including Na, Fe, and crystalline carbon has high crushing strength and water resistance in addition to carbon dioxide capture capacity, and thus achieves the effect of durability.

### Industrial Applicability

The carbon dioxide solid capture material of the present disclosure is suitable as a carbon dioxide solid capture material. Having excellent durability, the carbon dioxide solid capture material of the present disclosure can undergo repeated adsorption and desorption cycles and is thus industrially useful.

## Claims

1. A carbon dioxide solid capture material comprising iron, sodium, and crystalline carbon.

2. The carbon dioxide solid capture material of claim 1, wherein
the crystalline carbon is at least one substance selected from graphite, carbon nanotube, acetylene black, and calcine coke.

3. The carbon dioxide solid capture material of claim 1 or 2, further comprising a binder.

4. The carbon dioxide solid capture material of claim 3, wherein
the binder is at least one substance selected from amorphous carbon, polyamide-imide, polyester, an epoxy resin, polyurethane, and an acrylic resin.

5. The carbon dioxide solid capture material of claim 3, wherein
the binder further includes a calcined product of pitch.

6. The carbon dioxide solid capture material of claim 4, wherein
a percentage of a total carbon content of the crystalline carbon and the binder is 10 to 70 wt%.

7. The carbon dioxide solid capture material of claim 1, further comprising sodium ferrite.

8. The carbon dioxide solid capture material of claim 1, wherein
a composition ratio of the Fe included in the carbon dioxide solid capture material is 5 to 50 wt%.
